# EUROPÄISCHE PATENTSCHRIFT

(11) **EP 2 926 956 B1**
(45) Veröffentlichungstag und Bekanntmachung des Hinweises auf die Patenterteilung: **03.05.2017**
(21) Anmeldenummer: 15159220.1
(22) Anmeldetag: 16.03.2015
(51) Int. Cl.: B25J 15/00, B65G 47/91

(54) **GREIFVORRICHTUNG**
GRIPPING DEVICE
DISPOSITIF DE PRISE

(30) Priorität: 01.04.2014 DE 102014206193
(43) Veröffentlichungstag der Anmeldung: 07.10.2015
(73) Patentinhaber: J. Schmalz GmbH, 72293 Glatten (DE)
(72) Erfinder: Dunkmann, Walter, 76530 Baden-Baden (DE); Bauer, Stefan, 72250 Freudenstadt-Dietersweiler (DE); Hemmen, Alexander, 26169 Friesoythe (DE)
(74) Vertreter: DREISS Patentanwälte PartG mbB

(56) Entgegenhaltungen:
- EP-A1- 2 585 393
- WO-A2-2014/033021
- DE-A1-102011 083 451
- US-B1- 7 398 735

## Beschreibung

Die Erfindung betrifft eine Greifvorrichtung mit einem Bernoulli-Greifer gemäß dem Oberbegriff des Anspruchs 1.

Bei derartigen Greifvorrichtungen gemäß dem Oberbegriff des Anspruchs 1, wie z.B. aus der WO 2011/162995 A1 bekannt, wird die Saugwirkung dadurch erzeugt, dass aus einer beispielsweise in der Anlagefläche vorgesehene Ausströmöffnung eine Treibluftströmung nach außen hin abgeführt wird, beispielsweise entlang der Anlagefläche. Durch die schnelle Strömung wird aufgrund des Bernoulli-Prinzips ein statischer Unterdruck erzeugt, welcher die Saugwirkung hervorruft.

Ein grundsätzliches Problem bei derartigen Greifvorrichtungen besteht darin, dass der Greifer aufgrund von Querkräften (d.h. entlang der Anlagefläche wirkenden bzw. senkrecht zur eigentlichen Haltekraft wirkenden Kräften) von dem gehaltenen Gegenstand abgerissen werden kann. Dieses Problem tritt insbesondere dann auf, wenn mittels des Bernoulli-Greifers ein einzelner Gegenstand aus einem Verbund (z.B. Stapel, Haufen) herausgelöst und verlagert werden soll. In diesem Fall sind nicht nur Hebekräfte, sondern auch seitliche Kräfte aufzubringen. Ein Einsatzgebiet der vorliegenden Erfindung ist insbesondere die Handhabung von biegeschlaffen und/oder schichtartigen Materialien, beispielsweise gewobene Materialien, Faserverbundmaterialien oder Textilien. Hier ist es beispielsweise erwünscht, einzelne oder mehrere Lagen des Materials von einem Stapel abzunehmen und auf einem Schneidtisch zu drapieren, bzw. die zugeschnittenen Materialien aufzunehmen und wieder zu stapeln.

Bei der Handhabung derartiger biegeschlaffer oder schichtartiger Materialien mittels Sauggreifvorrichtungen besteht das Problem, dass die Materialien zwischen den einzelnen Saugstellen durchhängen können, da herkömmliche Sauggreifer nur geringe Querkräfte auf das Material übertragen können und die Materiallagen daher seitlich verrutschen können. Ein positionsgenaues Handhaben ist dann nur bedingt möglich.

Für die Handhabung von Mattenstapeln oder Textilstapeln mittels Sauggreifern ist es beispielsweise aus der DE 101 52 232 A bekannt, die Sauggreifvorrichtung mit ein- und ausfahrbaren Greifdornen auszustatten, welche schräg in den Mattenstapel eingedrückt werden und so ein Auseinanderrutschen des Stapels bei dessen Handhabung verhindern.

Bekannt sind außerdem konventionelle Sauggreifvorrichtungen, welche eine mit Unterdruck beaufschlagbare Saugglocke aufweisen, welche zum Greifen eines Gegenstandes angelegt und mit Unterdruck beaufschlagt wird. Bei diesen Sauggreifern gelangt - anders als bei den vorstehenden beschriebenen Bernoulli-Greifern - eine Anlagefläche der Saugglocke in unmittelbaren Kontakt mit einer Oberfläche des zu greifenden Gegenstandes. Hierbei ist es beispielsweise aus der DE 103 04 169 B4 bekannt, zur Erhöhung der übertragbaren Querkräfte die Kontaktfläche des Saugers mit stab-, lamellen- oder stiftförmigen Elementen zu strukturieren. In der DE 10 2006 022 277 B4 ist beschrieben, die an dem zu greifenden Gegenstand angedrückte Kontaktfläche eines elastischen Saugkörpers mit dornartigen Strukturen zur Erhöhung von Querkräften zu versehen. Prinzipbedingt erfordern derartige Sauggreifvorrichtungen stets einen möglichst dichten, unmittelbaren Kontakt der Kontaktfläche des Saugers an den zu greifenden Gegenstand, was bei z.B. bei textilen Werkstoffen problematisch sein kann. Außerdem ist die Tiefenwirkung solcher mit Unterdruck beaufschlagter Sauggreifvorrichtungen oftmals begrenzt.

Außerdem sind z.B. aus der DE 10 2011 083 451 A1 und der WO 2014/033021 A2 Nadelgreifer bekannt, welche aktiv angetriebene, über eine Anlagefläche schräg ausfahrbare und rückziehbare Greifnadeln aufweisen. Zum Greifen eines Gegenstandes werden die Greifnadeln schräg zur Gegenstandsoberfläche in das Material des Gegenstandes eingeschoben.

Der Erfindung liegt die Aufgabe zugrunde, die eine zuverlässige und energieeffiziente Handhabung von biegeschlaffen oder schichtartigen Materialien wie Faserverbundmaterialien oder Textilien zu ermöglichen.

Zur Lösung wird eine Greifvorrichtung zum Greifen von insbesondere biegeschlaffen oder schichtartigen Gegenständen bzw. Materialien gemäß Anspruch 1 vorgeschlagen. Zum Ansaugen des zu greifenden Gegenstandes ist eine als Bernoulli-Greifer ausgebildete Sauggreifeinrichtung vorgesehen. Diese weist eine erste Anlagefläche auf, an welche der zu greifende Gegenstand entlang einer Greifrichtung heransaugbar ist. Der Bernoulli-Greifer erzeugt die Saugwirkung unter Ausnutzung des Bernoulli-Prinzips. Hierzu wird durch eine Ausströmöffnung in der ersten Anlagefläche eine Treibströmung (insbesondere Druckluft) ausgestoßen, die dann derart abströmt (z.B. nach lateral außen entlang der ersten Anlagefläche), dass aufgrund der Treibströmung ein statischer Unterdruck erzeugt wird, der die Ansaugwirkung hervorruft.

Erfindungsgemäß umfasst die Greifvorrichtung zusätzlich eine Nadeleinrichtung, die ebenfalls eine Anlagefläche für den Gegenstand aufweist (im Folgenden als zweite Anlagefläche bezeichnet). An der zweiten Anlagefläche ist wenigstens eine Haltenadel vorgesehen, die von der zweiten Anlagefläche in Greifrichtung (d.h. in der Richtung, entlang welcher ein zu greifender Gegenstand an die erste Anlagefläche herangeführt wird) absteht. Die Haltenadel steht senkrecht von der zweiten Anlagefläche ab. Dadurch wird ein Eindringen der Haltenadel in den angesaugten Gegenstand zuverlässig ermöglicht.

Durch die abstehende Haltenadel können Querkräfte aufgenommen werden, welche auf den von dem Bernoulli-Greifer angesaugten Gegenstand wirken. Dadurch kann ein Verrutschen des Gegenstandes an dem Bernoulli-Greifer verhindert werden. Außerdem kann ein Durchhängen eines flexiblen gegriffenen Materials zwischen verschiedenen Saugstellen verhindert werden, da die mit dem Durchhängen verbundene seitliche Bewegung des Materials durch die Haltenadel unterbunden wird. Hierzu sind insbesondere mehrere Haltenadeln vorgesehen, so dass das gegriffene Material zwischen mehreren Nadeln eingespannt ist.

Die Haltenadel kann grundsätzlich als ein passives Element zur Aufnahme von Querkräften ausgebildet sein. Es ist insbesondere insofern passiv, als das Eindringen der Haltenadel in den zu greifenden Gegenstand allein durch die Ansaugwirkung und/oder ein Andrücken der Greifvorrichtung an dem zu greifenden Gegenstand erzielt wird. Hierbei ist insbesondere die mit dem Bernoulli-Greifer erzielbare hohe Tiefenwirkung vorteilhaft, wodurch Gegenstände über eine gewisse Distanz an die Anlagefläche herangesaugt werden können. Abweichend von der rein passiven Ausgestaltung ist jedoch auch denkbar, dass die Haltenadel aktiv angetrieben ist, was z.B. ein Abstreifen des Gegenstandes ermöglicht, wie unten noch näher erläutert.

Die Haltenadel kann zur weiteren Ausgestaltung federnd gelagert sein. Sie kann insofern entgegen einer Federkraft in Richtung zur Anlagefläche der Nadeleinrichtung eindrückbar sein, so dass Beschädigungen von festen Oberflächen der gegriffenen Gegenstände vermieden werden können.

Um die Saugwirkung des Bernoulli-Greifers zu unterstützen, sind vorzugsweise mit der Ausströmöffnung korrespondierende Strömungsführungsmittel vorgesehen, welche die aus der Ausströmöffnung austretende Treibströmung umlenken oder umformen. Insbesondere wird die austretende Treibströmung in einen Randbereich der ersten und/oder zweiten Anlagefläche, insbesondere nach radial außen umgelenkt. Beispielsweise kann die Ausströmöffnung in einem inneren Bereich der ersten Anlagefläche angeordnet sein und die Strömungsführungsmittel die Treibströmung nach radial außen umlenken, so dass sie entlang der ersten und/oder zweiten Anlagefläche strömt. Die Strömungsführungsmittel sind beispielsweise Schrägflächen, Umlenkflächen oder Düseneinrichtungen, welche insbesondere an der ersten Anlagefläche selbst angeordnet sind.

Eine kompakte Anordnung ergibt sich dadurch, dass die Ausströmöffnung als Ringspalt in der ersten Anlagefläche oder zwischen der ersten und der weiteren Anlagefläche ausgebildet ist. Der Ringspalt ist insbesondere derart ausgeformt, dass die austretende Treibströmung radial entlang der Anlagefläche nach außen strömt. Die Haltenadeln können dann beispielsweise den Ringspalt umgebend außerhalb des von dem Ringspalt umschlossenen Bereiches angeordnet sein. Innerhalb des umschlossenen Bereiches können dann weitere Einrichtungen angeordnet werden, beispielsweise Zusatz-Greifnadeln oder Abdrückvorrichtungen, wie nachfolgend noch näher erläutert.

Die erste Anlagefläche der Sauggreifeinrichtung und die zweite Anlagefläche der Nadeleinrichtung müssen nicht zwingend getrennte Flächen sein. Die erste und die zweite Anlagefläche können auch von Abschnitten einer gemeinsamen Vorrichtungsgreiffläche gebildet sein. Beide Anlageflächen können an einer Seite der Greifvorrichtung gebildet sein, welche zur Anlage an den zu greifenden Gegenstand dient. Denkbar ist jedoch auch, dass die zweite Anlagefläche separat und insbesondere beabstandet von der ersten Anlagefläche angeordnet ist.

Insbesondere ist die zweite Anlagefläche um die erste Anlagefläche herum angeordnet, und umgibt die erste Anlagefläche beispielsweise ringförmig. Zwischen den beiden Anlageflächen kann dann die Ausströmöffnung, beispielsweise als Ringspalt, vorgesehen sein.

Eine verbesserte Querkraftaufnahme wird ermöglicht, wenn mehrere Haltenadel vorgesehen sind. So kann der Gegenstand gegen Verrutschen und Verdrehen fixiert werden. Insbesondere sind mehr als drei Haltenadeln vorgesehen, die nicht entlang einer Linie angeordnet sind. Dadurch wird eine Stabilisierung entlang mehrerer Richtungen erzielt.

Zur weiteren Ausgestaltung ist die wenigstens eine Haltenadel oder alle Haltenadeln senkrecht zur zugeordneten Anlagefläche einfahrbar und ausfahrbar. Hierzu kann ein entsprechender Haltenadelantrieb vorgesehen sein. Zum Loslassen des Gegenstandes kann dann die Treibluftströmung deaktiviert und die Haltenadeln eingefahren werden und aus dem Gegenstand zurückgezogen werden. Somit wird verhindert, dass der Gegenstand ungewollt an der Haltenadel hängen bleibt.

Sind die Haltenadeln einfahrbar und ausfahrbar, so kann zur weiteren Ausgestaltung eine Einrichtung vorgesehen sein, mittels welcher die Einfahrtiefe und/oder die Ausfahrtiefe einstellbar ist.

Um ein sicheres Ablösen des Gegenstands zu ermöglichen, kann eine Abdrückvorrichtung zum Abdrücken des Gegenstandes von der ersten und/oder der zweiten Anlagefläche vorgesehen sein. Die Abdrückvorrichtung kann beispielsweise ein Abdrückorgan (z.B. Bolzen) aufweisen, welches z.B. mittels eines Hubzylinders betätigt wird und in Richtung von der ersten und/oder zweiten Anlagefläche weg verlagerbar ist.

Die Erfindung ermöglicht auch eine Ausgestaltung, bei der eine Abblasöffnung in der ersten und/oder zweiten Anlagefläche vorgesehen ist, durch welche zum Abdrücken des gegriffenen Gegenstandes ein Druckluftimpuls ausstoßbar ist. Die Druckluftversorgung der Abblasöffnung kann in vorteilhafter Weise mit der ohnehin vorhandenen Druckluftversorgung des Bernoulli-Greifers erfolgen.

Zur weiteren Ausgestaltung kann die Greifvorrichtung eine oder mehrere Zusatz-Greifnadeln aufweisen (insbesondere als Teil der Nadeleinrichtung), welche schräg zu der jeweiligen Anlagefläche verlaufen oder schraubenartig bzw. spiralförmig verlaufen. Diese Zusatz-Greifnadeln können sich untereinander und/oder mit den sich senkrecht zur Anlagefläche verlaufenden Haltenadeln überkreuzen. Die Zusatz-Greifnadeln können Teil einer in die Greifvorrichtung integrierten konventionellen Nadelgreifeinrichtung sein, mit welcher der Gegenstand aktiv gegen ein Herabfallen von der Greifvorrichtung gehalten werden kann. Die Zusatz-Greifnadeln können einfahrbar und ausfahrbar angetrieben sein. Insbesondere sind die Zusatz-Greifnadeln unabhängig von den Haltenadeln einfahrbar und ausfahrbar. Dies ermöglicht es, nach Ansaugen des Gegenstandes diesen mit den Zusatz-Greifnadeln zu greifen und die Treibströmung zu deaktivieren. Dadurch kann Energie eingespart werden. Zum Einfahren und Ausfahren der Zusatz-Greifnadeln ist ein entsprechender Greifnadelantrieb vorgesehen.

Bei Ausgestaltungen mit Haltenadelantrieb und/oder Greifnadelabtrieb können diese beispielsweise einen Elektromotor mit entsprechender Getriebeumsetzung umfassen. Jeder der Antriebe kann z.B. auch druckluftgetrieben ausgebildet sein, z.B. als Pneumatikzylinder.

Die Greifvorrichtung umfasst insbesondere eine Steuereinrichtung, die den Haltenadelantrieb und/oder den Greifnadelantrieb derart ansteuert, dass die Haltenadeln und die Zusatz-Greifnadeln gemeinsam eingefahren werden. Insbesondere ist dabei vorgesehen, dass die Haltenadeln und die Zusatznadeln unabhängig voneinander ausfahrbar sind. Dadurch können zum Loslassen des Gegenstandes sämtliche Nadeln aus diesem zurückgezogen werden.

Die Erfindung wird im Folgenden anhand der Figuren näher erläutert.

Es zeigen:
Figur 1 perspektivische Außenansicht auf eine erste Ausführungsform einer Greifvorrichtung;
Figur 2 Seitenansicht zu Figur 1;
Figur 3 Ansicht der Greifvorrichtung gemäß Figuren 1 und 2 auf die Anlagefläche;
Figur 4 schematische Seitenansicht einer weiteren Ausführungsform einer Greifvorrichtung.

In der nachfolgenden Beschreibung sowie in den Figuren sind für identische oder einander entsprechende Merkmale jeweils dieselben Bezugszeichen verwendet.

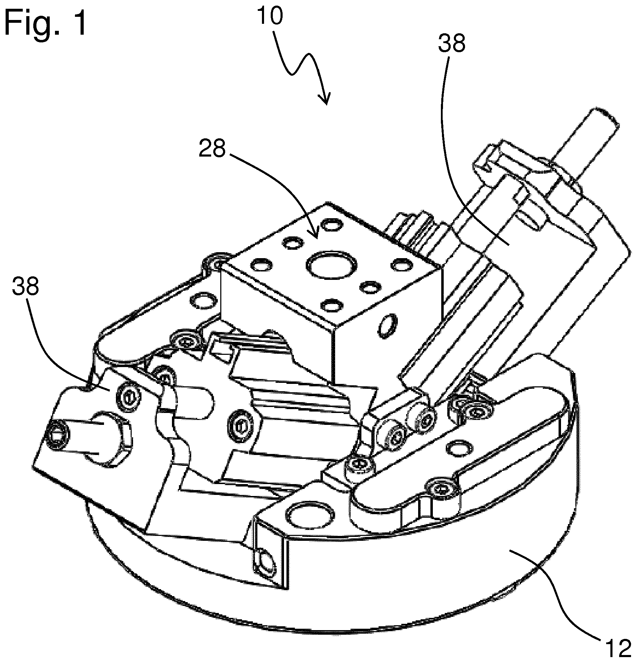

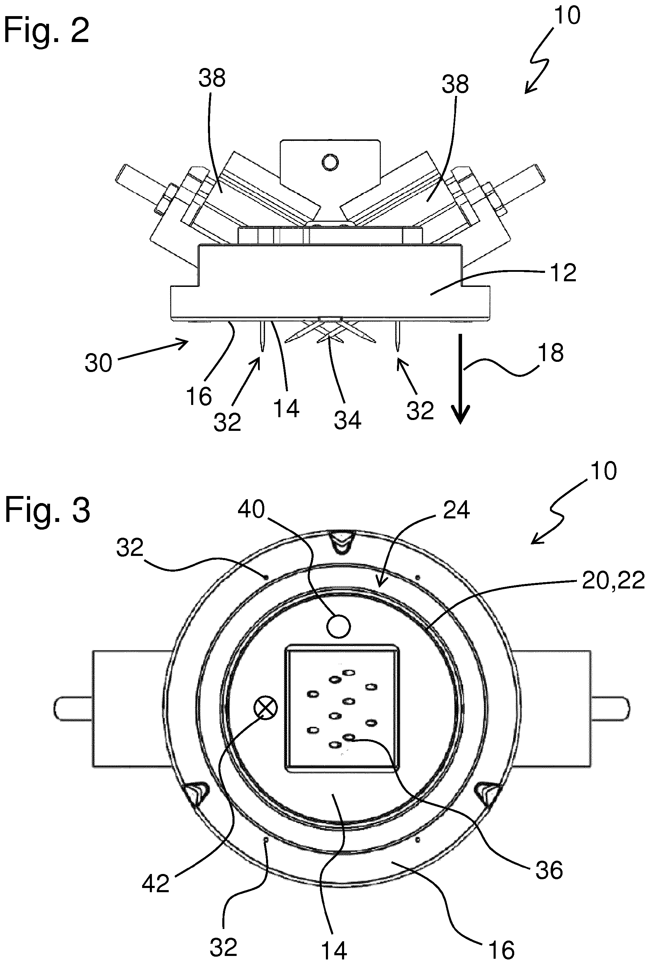

In den Figuren 1 bis 3 ist eine Greifvorrichtung 10 dargestellt, welche einen besonders kompakten Aufbau aufweist. Die Greifvorrichtung 10 hat ein zylinderscheibenartiges Basisteil 12, dessen Unterseite eine erste Anlagefläche 14 und eine zweite Anlagefläche 16 bereitstellt, die zum Greifen eines beispielsweise mattenartigen Gegenstandes an diesen herangeführt wird. Die erste Greiffläche 14 und zweite Greiffläche 16 werden anhand der Figur 3 weiter unten noch näher erläutert. Die Greifvorrichtung 10 wird entlang einer Greifrichtung 18, die sich im dargestellten Beispiel senkrecht zu der ersten Greiffläche 14 und zweiten Greiffläche 16 erstreckt, an den Gegenstand herangeführt, um diesen zu greifen.

Die Figur 3 zeigt eine Ansicht auf diejenige Seite des Basisteils 12, welche die beiden Greifflächen bereitstellt. Diese Seite des Basisteils bildet eine gemeinsame Vorrichtungsgreiffläche. Ein innerer kreisförmiger Abschnitt der Vorrichtungsgreiffläche bildet die erste Greiffläche 14. Die erste Greiffläche 14 wird ringartig von der zweiten Greiffläche 16 umgeben.

Zwischen erster Greiffläche 14 und zweiter Greiffläche 16 ist ein Ringspalt 20 gebildet, welcher eine Ausströmöffnung 22 einer in die Greifvorrichtung 10 integrierten Sauggreifeinrichtung 24 bildet.

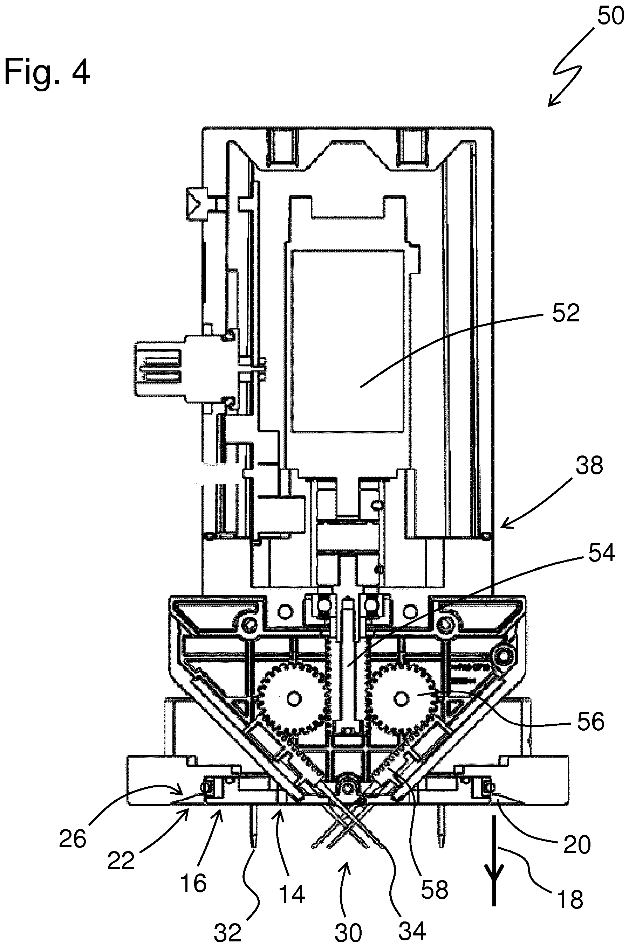

Die Sauggreifeinrichtung 24 ist als Bernoulli-Greifer ausgebildet und erzeugt eine Saugwirkung entlang der Greifrichtung 18 dadurch, dass durch die Ausströmöffnung 22 eine Treibströmung (z.B. Druckluft) ausgestoßen wird und entlang der Vorrichtungsgreiffläche (insbesondere der zweiten Anlagefläche 16) nach radial außen strömt. Hierzu ist der Ringspalt 20 entsprechend konturiert und weist z.B. entsprechende Strömungsführungsmittel 26 auf (in den Figuren 1 bis 3 nicht näher dargestellt, jedoch entsprechend der Figur 4 ausgestaltet sein können).

Zur Bereitstellung der Treibströmung kann das Basisteil 12 beispielsweise einen Anschlussabschnitt 28 aufweisen, mittels welchem die Greifvorrichtung 10 in einer Handhabungsanlage verbaut werden kann und durch die beispielsweise eine Druckluftversorgung erfolgen kann (vgl. Figur 1).

Zur weiteren Ausgestaltung umfasst die Greifvorrichtung 10 eine insgesamt mit dem Bezugszeichen 30 versehene Nadeleinrichtung. Die Nadeleinrichtung 30 umfasst verschiedene Arten von Nadeln, welche verschiedene Funktionen ausüben. Einerseits sind sogenannte Haltenadeln 32 vorgesehen, welche sich von der Vorrichtungsgreiffläche bzw. den Anlageflächen 14, 16 weg entlang der Greifrichtung 18 erstrecken.

Die Haltenadeln 32 können in ein entlang der Greifrichtung angesaugtes Material eindringen und können Querkräfte (insbesondere Kräfte parallel zu den Anlageflächen 14, 16) aufnehmen. Dadurch verhindern die Haltenadeln 32 ein seitliches Verrutschen sowie ein Durchhängen des Materials.

Die Haltenadeln 32 sind jedoch insbesondere nicht dazu ausgebildet, eine Hebekraft entlang der Greifrichtung 18 aufzubringen. Hierzu kann die Nadeleinrichtung 30 optional weitere Zusatz-Greifnadeln 34 aufweisen, welche schräg zu den Anlageflächen 14, 16 verlaufen und sich insbesondere überkreuzen.

Im dargestellten Beispiel sind die Zusatz-Greifnadeln 34 bezüglich der Anlageflächen 14, 16 einfahrbar und ausfahrbar. Wie in Figur 3 erkennbar, sind hierzu in der ersten Anlagefläche 14 entsprechende Nadelöffnungen 36 vorgesehen, in welchen die Zusatz-Greifnadeln 34 geführt sind. Zum Ein- und Ausfahren der Zusatz-Greifnadeln 34 sind entsprechende Greifnadelantriebe 38 vorgesehen - im dargestellten Beispiel zwei Greifnadelantriebe für die beiden, einander überkreuzenden Richtungen der Zusatz-Greifnadeln 34.

Die Haltenadeln 32 können als passive Elemente ausgebildet sein und optional federnd gelagert sein, so dass sie entgegen der Greifrichtung 18 eindrückbar sind. Denkbar ist jedoch auch, dass die Haltenadeln 32 ebenfalls ein- und ausfahrbar sind, wozu ein entsprechender Haltenadelantrieb (nicht näher dargestellt) vorgesehen ist. Durch Einfahren der Nadeln kann ein Gegenstand zuverlässig losgelassen werden.

Wie in der Figur 3 erkennbar, können die Haltenadeln 32 in dem bezüglich der Ausströmöffnung 22 radial außen liegenden Bereich (zweite Anlagefläche 16) angeordnet sein. In dem von der ringartigen Ausströmöffnung 22 eingeschlossenen Abschnitt der Vorrichtungsgreiffläche (erste Anlagefläche 14) können dann die ein- und ausfahrbaren Zusatz-Greifnadeln 34 positioniert sein. An der ersten Anlagefläche 14 (und/oder entsprechend an der zweiten Anlagefläche 16) können auch weitere funktionale Einrichtungen vorgesehen sein, beispielsweise eine skizziert dargestellte Abblasöffnung 40, durch welche zum Abdrücken eines gegriffenen Gegenstandes ein Druckluftimpuls ausstoßbar ist. Der Druckluftimpuls kann in vorteilhafter Weise von der für den Bernoulli-Greifer vorgesehenen Druckluftversorgung gespeist werden. Denkbar ist auch, dass an der ersten und/oder zweiten Anlagefläche 16 eine mechanische Abdrückvorrichtung 42 vorgesehen ist, welche beispielsweise ein über die erste bzw. zweite Anlagefläche 14, 16 ausfahrbares Abdrückorgan aufweist (in Figur 3 skizziert dargestellt).

Bei der in der Figur 4 dargestellten Greifvorrichtung 50 ist eine andere Ausgestaltung für den Greifnadelantrieb 38 zum Ein- und Ausfahren der Zusatz-Greifnadeln 34 realisiert. Dieser umfasst einen Elektromotor 52, welcher eine Spindel 54 mit Außengewinde rotatorisch antreibt, wobei die Spindel 54 mit Getrieberitzeln 56 in Eingriff steht, welche andererseits einen verfahrbaren Nadelschlitten 58 mit zugeordnetem Zahnstangenabschnitt antreiben. Dadurch kann der Nadelschlitten 58 verlagert werden und so die Zusatz-Greifnadeln 54 schräg zur Greifrichtung 18 ein- und ausgefahren werden.

In Figur 4 ist außerdem eine Ausgestaltung der Ausströmöffnung 22 für die Treibströmung erkennbar (hier: Ringspalt 20). In dem in der Figur 4 dargestellten Längsschnitt weist der Ringspalt 20 eine nach radial außen schräg in die zweite Anlagefläche 16 übergehende Schrägfläche 60 auf. Die Schrägfläche 60 bildet ein Strömungsführungsmittel 26, mittels welchem die durch den Ringspalt 20 austretende Treibströmung derart umgelenkt werden kann, dass nach dem Bernoulli-Prinzip eine Ansaugwirkung entgegen der Greifrichtung 18 hervorgerufen wird.

## Patentansprüche

1. Greifvorrichtung (10, 50) mit einer als Bernoulli-Greifer ausgebildeten Sauggreifeinrichtung (24), welche eine erste Anlagefläche (14) aufweist, an welche ein zu greifender Gegenstand heransaugbar ist, wobei in der ersten Anlagefläche (14) eine Ausströmöffnung (22) vorgesehen ist, welche dazu ausgebildet ist, durch Ausströmen einer Treibströmung eine Ansaugwirkung in Richtung zur Anlagefläche (14) hin nach dem Bernoulli-Prinzip zu erzeugen, **dadurch gekennzeichnet, dass** eine Nadeleinrichtung (30) mit einer zugeordneten zweiten Anlagefläche (16) und wenigstens einer Haltenadel (32) vorgesehen ist, welche von der zweiten Anlagefläche (16) in Greifrichtung (18) absteht und sich senkrecht zu der zweiten Anlagefläche (16) erstreckt.

2. Greifvorrichtung (10, 50) nach Anspruch 1, **dadurch gekennzeichnet, dass** korrespondierend mit der Ausströmöffnung (22) zugeordnete Strömungsführungsmittel (26) vorgesehen sind, welche die aus der Ausströmöffnung (22) austretende Treibströmung zur Erzeugung der Saugwirkung nach dem Bernoulli-Prinzip umlenken, insbesondere in Richtung des Randbereichs der zweiten Anlagefläche (16).

3. Greifvorrichtung (10, 50) nach einem der vorherigen Ansprüche, **dadurch gekennzeichnet, dass** die Ausströmöffnung (22) als Ringspalt (20) in der ersten Anlagefläche (14) oder zwischen der ersten (14) und der zweiten Anlagefläche (16) ausgebildet ist, wobei der Ringspalt (20) derart ausgeformt ist, dass die Treibströmung radial nach außen verläuft.

4. Greifvorrichtung (10, 50) nach einem der vorherigen Ansprüche, **dadurch gekennzeichnet, dass** die Greifvorrichtung (10, 50) eine zusammenhängende Vorrichtungsanlagefläche für den zu greifenden Gegenstand aufweist, wobei ein Abschnitt der Vorrichtungsanlagefläche die Anlagefläche (16) der Sauggreifeinrichtung (24) und ein anderer Abschnitt der Vorrichtungsgreiffläche die Anlagefläche (16) der Nadeleinrichtung (20) bildet.

5. Greifvorrichtung (10, 50) nach einem der vorherigen Ansprüche, **dadurch gekennzeichnet, dass** die zweite Anlagefläche (16) um die erste Anlagefläche (14) herum angeordnet ist, insbesondere dass die zweite Anlagefläche (16) die erste Anlagefläche (14) ringförmig umfängt.

6. Greifvorrichtung (10, 50) nach einem der vorherigen Ansprüche, **dadurch gekennzeichnet, dass** mehrere Haltenadeln (32) vorgesehen sind.

7. Greifvorrichtung (10, 50) nach einem der vorherigen Ansprüche, **dadurch gekennzeichnet, dass** die Haltenadel (32) senkrecht zur zweiten Anlagefläche (16) einfahrbar und ausfahrbar ist.

8. Greifvorrichtung (10, 50) nach einem der vorherigen Ansprüche, **dadurch gekennzeichnet, dass** eine Abdrückvorrichtung (42) zum Abdrücken des Gegenstandes von der ersten (14) und/oder der zweiten (16) Anlagefläche vorgesehen ist.

9. Greifvorrichtung (10, 50) nach einem der vorherigen Ansprüche, **dadurch gekennzeichnet, dass** eine Abblasöffnung (40) in der ersten (14) und/oder zweiten (16) Anlagefläche vorgesehen ist, durch welche zum Abdrücken des Gegenstandes ein Druckluftimpuls ausstoßbar ist.

10. Greifvorrichtung (10, 50) nach einem der vorherigen Ansprüche, **dadurch gekennzeichnet, dass** wenigstens eine, vorzugsweise mehrere Zusatz-Greifnadeln (34) vorgesehen sind, welche sich schräg zu der ersten (14) und/oder zweiten Anlagefläche (16) erstrecken oder schraubenlinienartig verlaufen.

11. Greifvorrichtung (10, 50) nach dem vorherigen Anspruch, **dadurch gekennzeichnet, dass** die Zusatz-Greifnadeln (34) einfahrbar und ausfahrbar angetrieben sind, insbesondere unabhängig von den Haltenadeln (32).

12. Greifvorrichtung (10, 50) nach zumindest den Ansprüchen 8 und 12, **dadurch gekennzeichnet, dass** eine Steuereinrichtung vorgesehen ist, welche einen Haltenadelantrieb und einen Greifnadelantrieb (38) derart ansteuert, dass die Haltenadeln (32) und die Zusatz-Greifnadeln (34) gemeinsam eingefahren werden.

## Claims

1. Gripping apparatus (10, 50) comprising a suction gripping device (24) that is designed as a Bernoulli grip and has a first contact surface (14) onto which an object to be gripped can be suctioned, an outflow opening (22) being provided in the first contact surface (14), which opening is designed to generate a suction effect towards the contact surface (14) according to Bernoulli's principle by means of a jet flow flowing out, **characterized in that** a needle device (30) is provided having an associated second contact surface (16) and at least one holding needle (32) which protrudes from the second contact surface (16) in the gripping direction (18) and extends perpendicularly to the second contact surface (16).

2. Gripping apparatus (10, 50) according to claim 1, **characterized in that** flow guide means (26) are provided that are correspondingly associated with the outflow opening (22) and that divert the jet flow exiting the outflow opening (22), in particular towards the edge region of the second contact surface (16), in order to generate the suction effect according to Bernoulli's principle.

3. Gripping apparatus (10, 50) according to either of the preceding claims, **characterized in that** the outflow opening (22) is designed as an annular gap (20) in the first contact surface (14) or between the first (14) and the second contact surface (16), the annular gap (20) being formed such that the jet flow extends radially outwards.

4. Gripping apparatus (10, 50) according to any of the preceding claims, **characterized in that** the gripping apparatus (10, 50) comprises a continuous apparatus contact surface for the object to be gripped, one portion of the apparatus contact surface forming the contact surface (16) of the suction gripping device (24) and another portion of the apparatus gripping surface forming the contact surface (16) of the needle device (20).

5. Gripping apparatus (10, 50) according to any of the preceding claims, **characterized in that** the second contact surface (16) is arranged around the first contact surface (14), in particular **in that** the second contact surface (16) surrounds the first contact surface (14) in an annular manner.

6. Gripping apparatus (10, 50) according to any of the preceding claims, **characterized in that** a plurality of holding needles (32) are provided.

7. Gripping apparatus (10, 50) according to any of the preceding claims, **characterized in that** the holding needle (32) can be retracted and extended perpendicularly to the second contact surface (16).

8. Gripping apparatus (10, 50) according to any of the preceding claims, **characterized in that** a release apparatus (42) is provided for releasing the object from the first (14) and/or second (16) contact surface.

9. Gripping apparatus (10, 50) according to any of the preceding claims, **characterized in that** a blow-off opening (40) is provided in the first (14) and/or second (16) contact surface, through which opening a pulse of compressed air can be emitted in order to release the object.

10. Gripping apparatus (10, 50) according to any of the preceding claims, **characterized in that** at least one, preferably a plurality of, additional gripping needles (34) are provided which extend obliquely to the first (14) and/or second contact surface (16) or extend in a helical manner.

11. Gripping apparatus (10, 50) according to the preceding claim, **characterized in that** the additional gripping needles (34) are driven so as to be retractable and extendable, in particular independently of the holding needles (32).

12. Gripping apparatus (10, 50) according to at least claims 8 and 12, **characterized in that** a controller is provided which controls a holding needle drive and a gripping needle drive (38) such that the holding needles (32) and the additional gripping needles (34) are retracted together.

## Revendications

1. Dispositif de préhension (10, 50) comprenant un dispositif de préhension par aspiration (24) qui est réalisé en tant que préhenseur de Bernoulli et qui présente une première surface d'appui (14) sur laquelle un objet à saisir peut être aspiré, dans lequel une ouverture d'écoulement (22) est prévue dans ladite première surface d'appui (14), qui est conçue pour générer, par écoulement d'un courant entraîneur, un effet d'aspiration en direction de la surface d'appui (14) selon le principe de Bernoulli, **caractérisé par le fait qu'**un dispositif à aiguille(s) (30) est prévu comprenant une deuxième surface d'appui (16) associée et au moins une aiguille de retenue (32) qui fait saille depuis ladite deuxième surface d'appui (16) dans la direction de préhension (18) et qui s'étend perpendiculairement à la deuxième surface d'appui (16).

2. Dispositif de préhension (10, 50) selon la revendication 1, **caractérisé par le fait que** des moyens de guidage de courant associés en correspondance avec ladite ouverture d'écoulement (22) sont prévus qui dévient le courant entraîneur sortant de l'ouverture d'écoulement (22) pour générer l'effet d'aspiration selon le principe de Bernoulli, en particulier en direction de la zone marginale de la deuxième surface d'appui (16).

3. Dispositif de préhension (10, 50) selon l'une quelconque des revendications précédentes, **caractérisé par le fait que** ladite ouverture d'écoulement (22) est réalisée en tant que fente annulaire (20) dans la première surface d'appui (14) ou entre les première (14) et deuxième (16) surfaces d'appui, dans lequel la fente annulaire (20) est formée de telle manière que le courant entraîneur s'étend radialement vers l'extérieur.

4. Dispositif de préhension (10, 50) selon l'une quelconque des revendications précédentes, **caractérisé par le fait que** le dispositif de préhension (10, 50) présente une surface d'appui de dispositif d'un seul tenant pour l'objet à saisir, dans lequel une portion de ladite surface d'appui de dispositif forme la surface d'appui (14) du dispositif de préhension par aspiration (24) et une autre portion de la surface de préhension de dispositif forme la surface d'appui (16) du dispositif à aiguille(s) (20).

5. Dispositif de préhension (10, 50) selon l'une quelconque des revendications précédentes, **caractérisé par le fait que** la deuxième surface d'appui (16) est disposée autour de la première surface d'appui (14), en particulier que la deuxième surface d'appui (16) entoure de façon annulaire la première surface d'appui (14).

6. Dispositif de préhension (10, 50) selon l'une quelconque des revendications précédentes, **caractérisé par le fait qu'**une pluralité d'aiguilles de retenue (32) est prévue.

7. Dispositif de préhension (10, 50) selon l'une quelconque des revendications précédentes, **caractérisé par le fait que** l'aiguille de retenue (32) peut être rentrée et sortie perpendiculairement à la deuxième surface d'appui (16).

8. Dispositif de préhension (10, 50) selon l'une quelconque des revendications précédentes, **caractérisé par le fait qu'**un dispositif de décollage (42) destiné à détacher par pression l'objet de la première (14) et/ou de la deuxième (16) surface d'appui est prévu.

9. Dispositif de préhension (10, 50) selon l'une quelconque des revendications précédentes, **caractérisé par le fait qu'**une ouverture d'échappement (40) est prévue dans la première (14) et/ou la deuxième (16) surface d'appui, à travers laquelle une impulsion d'air comprimé peut être expulsée pour détacher par pression ledit objet.

10. Dispositif de préhension (10, 50) selon l'une quelconque des revendications précédentes, **caractérisé par le fait qu'**au moins une, de préférence plusieurs aiguilles de préhension supplémentaires (34) sont prévues qui s'étendent de façon oblique par rapport à la première (14) et/ou la deuxième (16) surface d'appui ou qui s'étendent à la manière d'une hélice.

11. Dispositif de préhension (10, 50) selon la revendication précédente, **caractérisé par le fait que** lesdites aiguilles de préhension supplémentaires (34) sont entraînées de manière à pouvoir être rentrées et sorties, en particulier indépendamment des aiguilles de retenue (32).

12. Dispositif de préhension (10, 50) selon au moins les revendications 8 et 12, **caractérisé par le fait qu'**un dispositif de commande est prévu qui commande un mécanisme d'entraînement d'aiguille de retenue et un mécanisme d'entraînement d'aiguille de préhension (38) de telle sorte que les aiguilles de retenue (32) et les aiguilles de préhension supplémentaires (34) sont rentrées en commun.
